# EUROPÄISCHE PATENTSCHRIFT

(11) **EP 3 034 333 B1**
(45) Veröffentlichungstag und Bekanntmachung des Hinweises auf die Patenterteilung: **27.02.2019**
(21) Anmeldenummer: 15185416.3
(22) Anmeldetag: 16.09.2015
(51) Int. Cl.: B60C 11/13

(54) **FAHRZEUGLUFTREIFEN**
PNEUMATIC TYRE FOR A VEHICLE
PNEUMATIQUE POUR VEHICULE

(30) Priorität: 17.12.2014 DE 102014226329
(43) Veröffentlichungstag der Anmeldung: 22.06.2016
(73) Patentinhaber: Continental Reifen Deutschland GmbH, 30165 Hannover (DE)
(72) Erfinder: Behr, Ulrich, 30167 Hannover (DE); Domscheit, Andreas, 30459 Hannover (DE); Rittweger, Stefan, 30163 Hannover (DE)
(74) Vertreter: Finger, Karsten

(56) Entgegenhaltungen:
- EP-A1- 2 311 661
- DE-A1-102014 212 352
- JP-A- H1 016 515
- JP-A- H07 186 623
- JP-A- 2000 043 514

## Beschreibung

Die Erfindung betrifft einen Fahrzeugluftreifen mit einem profilierten Laufstreifen mit Rillen, die in radialer Richtung R des Reifens nach innen durch einen Rillengrund begrenzt werden, und mit durch Rillen begrenzten Profilblockelementen, welche in radialer Richtung nach außen hin durch eine radial äußere Oberfläche und zu der begrenzenden Rille jeweils mit einer die Rillenwand bildenden Flanke ausgebildet ist, welche sich aus dem Rillengrund in radialer Richtung nach außen erstreckt, wobei zumindest einige der Profilblockelemente in axialer Richtung A des Reifens zumindest zu einer Seite hin durch eine Umfangsrille und in Umfangsrichtung U des Reifens durch Schrägrillen begrenzt werden, welche unter Einschluss eines spitzen Winkels ihrer Erstreckungsrichtung zur Umfangsrichtung U in die Umfangsrille münden.

Derartige Fahrzeugluftreifen sind bekannt. Die im spitzen Winkel zwischen Umfangsrille und Schrägrille eingeschlossene Ecke des Profilblockelementes kann beim Abrieb des Profilblockelementes aufgrund seiner mechanisch weichen Ausbildung in stärkerem Maße als der Rest des Profilblockelementes stehen bleiben, was zu unregelmäßigem Abrieb führen kann. Die die Rillenwand der Schrägrille bildende Blockflanke des Profilblockelementes neigt in ihrem scharfkantigen Übergang zur radial äußeren Oberfläche des Profilblockelementes darüber dazu, beim Durchlaufen des Reifenlatsches einzurollen. Hierdurch wird die beim Trockenbremsen gewünschte Kontaktfläche zwischen radial äußerer Oberfläche und Straßenoberfläche unerwünscht reduziert, wodurch die Trockenbremseigenschaften negativ beeinflusst werden.

Es ist bekannt, bei derartigen Fahrzeugluftreifen, bei dem Profilblockelemente jeweils durch eine Schrägrille und eine Umfangsrille eingeschlossen werden, die in Drehrichtung des Reifens vorderste Spitze des Profilblockelementes durch eine geneigte Fläche abgeflacht auszubilden. Hierdurch kann verhindert werden, dass die vordere Spitze des zwischen Schrägrille und Umfangsrille eingeschlossenen Abschnitts während des Abriebs stehen bleibt, wodurch begrenzt ungleichmäßiger Abrieb reduziert werden kann. Allerdings ist bei diesen Reifen lediglich die vordere Drehrichtung vorderste Spitze als geneigte Fläche abgeflacht ausgebildet. Der Übergang zwischen dieser flach ausgebildeten Spitze und der Rillenwand sowohl der Schrägrille als auch der Umfangsrille, ist wiederum scharfkantig ausgebildet. Auch hierdurch kann regelmäßiger Abrieb noch unerwünscht beeinträchtigt werden.

Darüber hinaus sind die zwischen Flanke der Schrägrille und radial äußerer Oberfläche des Profilblockelementes gebildeten Kanten des Profilblockelementes weiterhin einrollgefährdet. Die Trockenbremseigenschaften werden somit auch durch diese Ausbildung negativ beeinträchtigt.

**Aus der** JP-H 10 16515 A **ist ein Fahrzeugluftreifen mit Profilblockelementen bekannt, die durch zwei sich schneidende Schrägrillen begrenzt sind, wobei die durch die beiden Schrägrillen gebildeten Flanken des Profilblockelementes sich in radialer Richtung ausgehend vom Rillengrund bis zu der das Profilblockelement nach radial außen hin begrenzenden radial äußeren Oberfläche erstrecken.**

Darüber hinaus ist es bekannt, bei Fahrzeugluftreifen in querverlaufenden Schrägrillen im Übergang zwischen Profilblockelementflanke und radial äußerer Oberfläche eine Fase auszubilden, die sich längs des gesamten Profilblockelementes gleichmäßig erstreckt. Dabei ist die Fase längs der gesamten Erstreckung mit gleicher Breite und mit gleichem Neigungswinkel zur Radialen ausgebildet. Durch diese Ausbildung ist es zwar möglich die Einrolleffekte zu reduzieren. Allerdings bewirkt bei derartigen Ausbildungen die Fase längs der gesamten Erstreckung der Schrägrille eine Reduktion der wirksamen Aufstandsfläche unerwünscht stark negativ beeinträchtigt werden können. Der Übergang zwischen Umfangsrille und Schrägrille ist weiterhin in der radial äußeren Oberfläche mit einer spitz zulaufenden Ecke im Übergang zwischen der Fase der Schrägrille und der Flanke der Umfangsrille ausgebildet, wodurch weiterhin die Nachteile des ungleichmäßigen Abriebes bestehen bleiben.

Der Erfindung liegt die Aufgabe zugrunde, bei derartigen Fahrzeugluftreifen sowohl unerwünschte Einrolleffekte als auch ungleichmäßigen Abrieb zu reduzieren.

Die Aufgabe wird erfindungsgemäß durch die Ausbildung eines Fahrzeugluftreifens mit einem profilierten Laufstreifen mit Rillen, die in radialer Richtung R des Reifens nach innen durch einen Rillengrund begrenzt werden, und mit durch Rillen begrenzten Profilblockelementen, welche in radialer Richtung nach außen hin durch eine radial äußere Oberfläche und zu der begrenzenden Rille jeweils mit einer die Rillenwand bildenden Flanke ausgebildet ist, welche sich aus dem Rillengrund in radialer Richtung nach außen erstreckt, wobei zumindest einige der Profilblockelemente in axialer Richtung A des Reifens zumindest zu einer Seite hin durch eine Umfangsrille und in Umfangsrichtung U des Reifens durch Schrägrillen begrenzt werden, welche unter Einschluss eines spitzen Winkels ihrer Erstreckungsrichtung zur Umfangsrichtung U in die Umfangsrille münden, gemäß den Merkmalen von Anspruch 1 gelöst, bei dem das im spitzen Winkel zwischen Umfangsrille und Schrägrille begrenzte Profilblockelement zwischen der radial äußeren Oberfläche und seiner zur Umfangsrille weisenden ersten Flanke mit einer ersten Fase und zwischen der radial äußeren Oberfläche und seiner zur Schrägrille weisenden zweiten Flanke mit einer zweiten Fase ausgebildet ist, wobei die erste Fase die radial äußere Oberfläche in einer ersten Schnittlinie S₁ und die zweite Fase die radial äußere Oberfläche in einer zweiten Schnittlinie S₂ schneidet, die die Schnittlinie S₁ schneidet, wobei die erste Fase in ihren senkrecht zur Umfangsrichtung U ausgebildeten Schnittebenen unter Einschluss eines Neigungswinkels α zur Radialen R geneigt und die zweite Fase in ihren senkrecht zur zweiten Schnittlinie S₂ ausgebildeten Schnittebenen unter Einschluss eines Neigungswinkels β zur Radialen R geneigt ausgebildet ist, wobei der Neigungswinkels α ausgehend von der Einmündung ausgehend längs der Erstreckung der ersten Fase entlang der Schnittlinie S₁ stetig abnimmt und wobei der Neigungswinkels β ausgehend von der Einmündung längs der Erstreckung der zweiten Fase entlang der Schnittlinie S₂ stetig abnimmt.

Durch diese Ausbildung wird es ermöglicht, dass in dem zwischen spitz zulaufender Umfangsrille und Schrägrille eingeschlossenen Blockelementabschnitt durch die beiden Fasen eine sehr abgeflachter Eckabschnitt ausgebildet ist, der ein unerwünschtes Stehenbleiben der Ecke beim Abrieb verhindert und somit ungleichmäßigem Abrieb reduziert. Darüber hinaus kann durch die beiden Fasen ein Einrollen der Kanten verhindert werden. Durch die Ausbildung mit abnehmendem Winkel α und ß ausgehend vom Mündungspunkt der Schrägrille in die Umfangsrille längs der Erstreckung der Fasen wird gerade in dem für Abrollprobleme besonders anfälligen, zur spitzen Ecke hingewandten Erstreckungsabschnitt besonders stark entgegenwirkt und mit zunehmender Entfernung von dem Mündungsabschnitt entsprechend weniger stark. Somit kann den Einrolleffekten sehr wirksam entgegengewirkt werden. Dabei wird durch die Ausbildung mit verändertem Winkel *α* und ß zusätzlich die Aufstandsfläche des Profilblockelementes weniger stark beeinträchtigt. Eine Reduktion der Aufstandsfläche erfolgt im Wesentlichen in den für die Einrolleffekte besonders kritischen zur Ecke hin ausgebildeten, vorderen Abschnitt. Somit können sowohl Trockenbremseigenschaften als auch sonstige Trockengriffeigenschaften und Nassgriffeigenschaften, bei denen ebenfalls eine optimale, möglichst große Straßenkontaktoberfläche gewünscht wird, weiter verbessert werden. Darüber hinaus ermöglicht die Ausbildung mit der Fase mit verändertem Fasenwinkel α im Bereich der Umfangsrille bei Profilen mit Profilblockreihen in einfacher Weise einen zusätzlichen axialen Versatz von wirksamen Griffkanten zwischen den in Umfangsrichtung hintereinander angeordneten Profilblockelementen und somit besseren Griff auf Nässe und Schnee.

Besonders vorteilhaft zur Stabilisierung der Kanten ist die Ausbildung eines Fahrzeugreifens gemäß den Merkmalen von Anspruch 2, wobei α mit α ≤ 45° und β mit β≤ 45° ausgebildet ist.

Besonders vorteilhaft ist die Ausbildung eines Fahrzeugreifens gemäß den Merkmalen von Anspruch 3, wobei der Schnittkonturverlauf zwischen erster Fase und erster Flanke von der Einmündung ausgehend längs seiner Erstreckung mit einem kontinuierlich abnehmendem radialen Abstand t₁ zur radial äußeren Oberfläche und der Schnittkonturverlauf zwischen zweiter Fase und zweiter Flanke von der Einmündung ausgehend längs seiner Erstreckung mit kontinuierlich abnehmendem radialen Abstand t₂ zur radial äußeren Oberfläche ausgebildet ist.

Besonders vorteilhaft ist die Ausbildung eines Fahrzeugreifens gemäß den Merkmalen von Anspruch 4, wobei der Abstand t₁ ausgehend von einem Maximalwert t₁ₘₐₓ - insbesondere mit 1mm ≤ t₁ₘₐₓ ≤3mm - bis zu einem Minimalwert t₁ₘᵢₙ mit t₁ₘᵢₙ =0mm abnehmend ausgebildet ist.

Besonders vorteilhaft ist die Ausbildung eines Fahrzeugreifens gemäß den Merkmalen von Anspruch 5, wobei der Abstand t₂ ausgehend von einem Maximalwert t₂ₘₐₓ - insbesondere mit 1mm ≤ t₂ₘₐₓ ≤3mm - bis zu einem Minimalwert t₂ₘᵢₙ mit t₂ₘᵢₙ =0mm abnehmend ausgebildet ist.

Besonders vorteilhaft ist die Ausbildung eines Fahrzeugreifens gemäß den Merkmalen von Anspruch 6, wobei sich die erste Fase ausgehend von der Mündung über die gesamte Erstreckungslänge der ersten Flanke erstreckt.

Besonders vorteilhaft ist die Ausbildung eines Fahrzeugreifens gemäß den Merkmalen von Anspruch 7, wobei das Profilblockelement längs der Erstreckung der Schrägrille ausgehend von der Umfangsrille mit einer in der radial äußeren Oberfläche gemessenen maximalen axiale Erstreckungbreite B ausgebildet ist, wobei sich die zweite Fase ausgehend von der Mündung längs der Erstreckung der Schrägrille bis in eine Position im axialen Abstand b mit b ≥ (2/3)B - insbesondere mit b ≥ (3/4)B - von der Umfangsrille erstreckt und dort endet.

Die Erfindung wird im Folgenden an Hand der in den Figuren 1 bis 6 dargestellten Ausführungsbeispiele näher erläutert. Hierin zeigen
- Fig.1: einen Abschnitt eines Laufstreifenprofiles eines Fahrzeugluftreifens für Personenkraftwagen (Pkw) in Draufsicht,
- Fig.2: das Laufstreifenprofil von Fig.1 in Schnittdarstellung gemäß Schnitt II-II von Fig.1,
- Fig.3: das Laufstreifenprofil von Fig.1 in Schnittdarstellung gemäß Schnitt III-III von Fig.1,
- Fig.4: das Laufstreifenprofil von Fig.1 in Schnittdarstellung gemäß Schnitt IV-IV von Fig.1,
- Fig.5: das Laufstreifenprofil von Fig.1 in Schnittdarstellung gemäß Schnitt V-V von Fig.1 und
- Fig.6: das Laufstreifenprofil von Fig.1 in perspektivischer Darstellung.

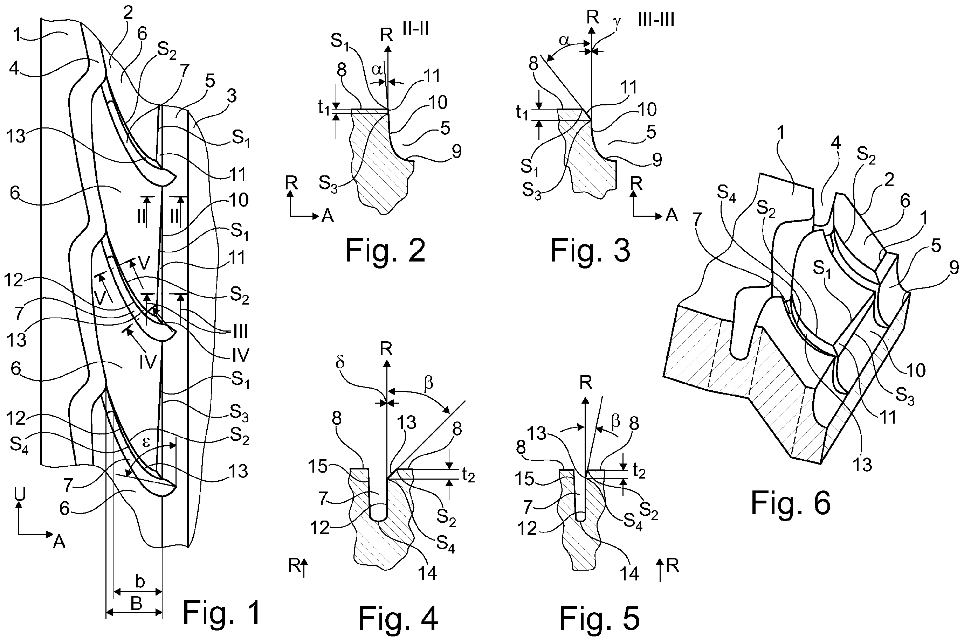

Die Figuren 1 bis 6 zeigen ein Laufstreifenprofil eines Fahrzeugluftreifens für Personenkraftwagen, bei welchem in bekannter Weise mehrere in Umfangsrichtung des Fahrzeugluftreifens ausgerichtete und über den Umfang des Fahrzeugluftreifens erstreckte Profilbänder 1, 2 und 3 in axialer Richtung A des Fahrzeugluftreifens nebeneinander angeordnet und durch Umfangsrillen 4 bzw. 5 jeweils voneinander beabstandet ausgebildet sind. Dabei sind das Profilband 1 und das Profilband 2 in axialer Richtung A durch eine über den gesamten Umfang des Fahrzeugluftreifens erstreckte und in Umfangsrichtung U ausgerichtete Umfangsrille 4 voneinander getrennt. Das Profilband 2 und das Profilband 3 sind in axialer Richtung A durch eine über den gesamten Umfang des Fahrzeugluftreifens erstreckte und in Umfangsrichtung U ausgerichtete Umfangsrille 5 voneinander getrennt. Die Figuren 2 und 3 sind Schnittdarstellungen, in den senkrecht zur Umfangsrichtung U gebildeten Schnittebenen, welche die Reifenachse beinhalten.

Das Profilband 2 ist als Profilblockreihe 2 bekannter Art mit in Umfangrichtung U des Fahrzeugluftreifens hintereinander angeordneten und jeweils durch Schrägrillen 7 voneinander getrennten Profilblockelementen 6 ausgebildet. Die Schrägrillen 7 erstrecken sich dabei jeweils ausgehend von der Umfangsrille 4 durch die gesamte Profilblockreihe 2 hindurch bis in die Umfangsrille 5 hinein und begrenzen jeweils in Umfangsrichtung U die beiden an die jeweilige Schrägrille 7 angrenzenden Profilblockelemente 6.

Die Umfangsrille 5 ist in Umfangrichtung U des Fahrzeugluftreifens ausgerichtet. Die Schrägrille 12 ist längs ihrer Erstreckung unter Einschluss eines Neigungswinkels ε zur Umfangsrichtung ausgerichtet und somit zur Umfangsrille 5 geneigt verlaufend ausgebildet, wobei ε mit ε < 90° ausgebildet ist. Die Schrägrille 12 schließt somit mit der Umfangsrille 5 einen spitzen Winkel ein. Wie in Fig. 1 zu erkennen ist, ist der Neigungswinkel ε dabei in der Position der Einmündung der Schrägrille 7 in die Umfangsrille 5 am größten und nimmt längs der axialen Erstreckung der Schrägrille 7 bis zur Umfangsrille 1 hin stetig ab.

Die Profilblockelemente 6 sind in radialer Richtung R des Fahrzeugluftreifens nach außen hin mit einer die Straßenkontaktoberfläche bildenden radial äußeren Oberfläche 8 begrenzt ausgebildet.

Die Umfangsrille 5 ist - wie in Fig. 1, 2 und 3 dargestellt ist - in radialer Richtung R nach innen hin durch einen über den gesamten Umfang des Fahrzeugluftreifens erstreckten Rillengrund 9 begrenzt. Die Schrägrillen 7 sind - wie in den Figuren 1, 4 und 5 dargestellt ist - in radialer Richtung R des Fahrzeugluftreifens nach innen hin durch einen längs der gesamten Erstreckung der Schrägrille ausgehend von der Umfangsrille 5 bis zur Umfangsrille 4 hin erstreckten Rillengrund 14 begrenzt.

Die Profilblockelemente 6 sind in axialer Richtung A des Fahrzeugluftreifens zur Umfangsrille 5 hin jeweils durch eine Flanke 10 begrenzt, welche sich in den senkrecht zur Umfangsrichtung U gebildeten Schnittebenen, die die Reifenachse beinhalten, ausgehend vom Rillengrund 9 in radialer Richtung R nach außen hin unter Einschluss eines Neigungswinkels γ zur radialen Richtung R erstreckt und die zum Profilblockelement 6 hin weisende Rillenwand der Umfangsrille 5 bildet. Der Neigungswinkel γ ist mit 0° ≤ γ ≤ 5° ausgebildet.

Die Profilblockelemente 6 sind in axialer Richtung A zur Umfangsrille 4 hin jeweils durch eine Flanke begrenzt, welche sich ausgehend vom Rillengrund der Umfangsrille 4 in radialer Richtung R nach außen bis zu der radial äußeren Oberfläche 8 des Profilblockelementes 6 erstreckt.

Die Profilblockelemente 6 sind in einer - in Fig. 1 in der nach oben hin dargestellten - einer Orientierung der Umfangsrichtung U durch eine Flanke 15 und in der anderen - in Fig.1 nach unten hin dargestellten - Orientierung der Umfangsrichtung mit einer Flanke 12 begrenzt, welche jeweils einen Rillenwand von einer das Profilblockelement 6 begrenzenden Schrägrille 7 bilden. Die Flanke 15 erstreckt sich dabei vom Rillengrund 14 ihrer Schrägrille 7 ausgehend in radialer Richtung R nach außen bis zur radial äußeren Oberfläche 8 des Profilblockelementes 6. Die Flanke 12 erstreckt sich ausgehend vom Rillengrund 14 ihrer Schrägrille 7 in radialer Richtung R nach außen. Somit ist jede Schrägrille 7 in Umfangsrichtung U hin durch eine Flanke 15 eines die Schrägrille 7 begrenzenden Profilblockelementes 6 und durch eine Flanke 12 eines anderen die Schrägrille 7 begrenzenden Profilblockelementes 6 begrenzt. Die Flanke 12 und die Flanke 10 eines Profilblockelementes 6 bilden somit in Analogie zum spitzen Winkel ε der Umfangsrille 5 und der Schrägrille 12 die das Profilblockelement 6 unter Einschluss eines spitzen Winkels begrenzenden Flanken 12,10.

Wie in den Figuren 1, 2 und 3 dargestellt ist, ist jeweils im radialen Übergang zwischen der radial äußeren Oberfläche 8 und der Flanke 10 eines Profilblockelementes 6 eine Fase 11 ausgebildet, welche sich längs der gesamten Erstreckung der Flanke 10 eines Profilblockelementes 6 erstreckt. Die Fase 11 schneidet dabei längs ihrer Erstreckung die radial äußere Oberfläche 6 in einer Schnittlinie S₁ und die Flanke 10 in einer Schnittlinie S₃. Die Schnittlinien S₁ und S₃ sind jeweils längs ihrer Erstreckung geradlinig verlaufend ausgebildet. Ausgehend von der Flanke 12 nimmt der in radialer Richtung R gemessenen Abstand t₁ der Schnittlinie S₃ von der Schnittlinie S₁ und somit zur radial äußeren Oberfläche 8 längs der Erstreckung der Schnittlinie S₃ zur anderen, das Profilblockelement begrenzenden Flanke 15kontinuierlich ab. Der Abstand t₁ verändert sich dabei längs der Erstreckung ausgehend von einem Maximalwert t₁ₘₐₓ bis zu einem Minimalwert t₁ₘᵢₙ mit t₁ₘᵢₙ = 0mm. Der Maximalwert t₁ₘₐₓ ist dabei mit 3mm ≥ t₁ₘₐₓ ≥1mm ausgebildet, beispielsweise mit t₁ₘₐₓ = 2mm.

Wie in Fig. 1 dargestellt ist, ist der Wert t₁ₘᵢₙ dabei an der Schnittstelle der Flanke 10 mit der Flanke 15 des Profilblockelementes 6 erreicht.

Im radialen Übergang zwischen der radial äußeren Oberfläche 8 und der Flanke 12 des Profilblockelementes 6 ist jeweils eine sich längs der Erstreckung der Schrägrille 7 erstreckte Fase 13 ausgebildet. Die Fase 13 schneidet die radial äußere Oberfläche 8 in einer Schnittlinie S₂ und die Flanke 12 in einer Schnittlinie S₄. In den Figuren 4 und 5 sind jeweils Schnittebenen dargestellt, welche senkrecht zur Schnittlinie S₂ gebildet sind. Wie dabei deutlich zu erkennen ist, ist die Fase 13 dabei jeweils in den Schnittebenen, die senkrecht zur Schnittlinie S₂ gebildet sind, unter Einschluss eines Neigungswinkels ß und die Flanke 12 unter Einschluss eines Neigungswinkels δ zur radialen Richtung R geneigt, wobei δ mit 0° ≤ δ ≤ 3° ausgebildet ist.

Die Schnittlinie S₄ ist dabei längs ihrer Erstreckung - und somit längs der Erstreckung der Schrägrille 7 - ausgehend von dem Schnitt der Flanke 10 mit der Flanke 12 des Profilblockelementes 6 in Richtung zur Umfangsrille 4 hin mit einem kontinuierlich abnehmenden, in radialer Richtung R von der radial äußeren Oberfläche 8 des Profilblockelementes 6 und von der Schnittlinie S₂ gemessenen Abstand t₂ ausgebildet. Der Abstand t₂ ist dabei ausgehend von einem in der Position des Schnittes der Flanken 10 mit der Flanke 12 ausgebildeten Maximalwert t₂ₘₐₓ bis zu einem Minimalwert t₂ₘᵢₙ abnehmend mit t₂ₘᵢₙ = 0mm ausgebildet. Die Position des minimalen radialen Abstands t₂ₘᵢₙ ist in einem in axialer Richtung A gemessenen Abstand b von der Umfangsrille 5 angeordnet, wobei b mit (3/4 B ≤ b ≤ B) gewählt ist. B gibt dabei die maximale in axialer Richtung A des Fahrzeugluftreifens gemessene Erstreckungslänge der Schrägrille 7 an. B und B werden dabei in der radialen Position der radial äußeren Oberfläche 6 gemessen.

In den senkrecht zur Umfangsrichtung U gebildeten Schnittebenen, die die Reifenachse beinhalten, ist die Fase 11 unter Einschluss eines Winkels α zur radialen Richtung R geneigt ausgebildet. Längs der Erstreckung der Fase 11 ausgehend von der Position des Schnittes der Flanke 11 mit der Flanke 12 bis zur Position des Schnittes der Flanke 11 mit der Flanke 15 ist die Fase mit einem kontinuierlich abnehmendem Winkel α ausgebildet. Der Winkel α weist sein Maximum αₘₐₓ in der Position des Schnittes der Flanke 10 mit der Flanke 12 auf, wobei αₘₐₓ = 45° ausgebildet ist.

Die Fase 13 ist längs der Erstreckung der Schrägrille 12 und somit der Schnittlinie S₂ ausgehend von der Schnittposition der Flanke 10 mit der Flanke 12 in Richtung zur Umfangsrille 4 hin mit kontinuierlich abnehmendem Neigungswinkel ß ausgebildet. Der Maximalwert ßₘₐₓ von ß ist somit in der Schnittposition der Flanke 10 mit der Flanke 12 gebildet mit ßₘₐₓ = 45°.

Der Minimalwert des Winkels α ist mit αₘᵢₙ = γ ausgebildet und ist erreicht in der Schnittposition der Flanke 11 mit der Flanke 12. In dieser Position schneiden sich auch die Schnittlinien S₁ und S₃.

Der Minimalwert des Winkels β ist mit β = δ ausgebildet und ist erreicht in der Position des Schnittes der Schnittlinien S₂ mit S₄, in der auch t₂ seinen Minimalwert t₂ₘᵢₙ = 0mm erreicht.

Im dargestellten Ausführungsbeispiel ist beispielsweise b mit b = (3/4)B ausgebildet.

In einem anderen, nicht dargestellten Ausführungsbeispiel ist b = B ausgebildet.

Wie in Fig. 1 und in Fig. 6 zu erkennen ist, ist die Schrägrille 7 in einem Ausführungsbeispiel längs ihrer Erstreckung ausgehend von der Umfangsrille 5 bis zur Rille 4 hin gekrümmt verlaufend ausgebildet unter kontinuierlicher Abnahme ihres Einschlusswinkels ε mit der Umfangsrille 5.

Die Umfangsrillen 5 sind mit einer in der radial äußeren Oberfläche gemessenen Breite ausgebildet, die mindestens 8mm und maximal 12mm gewählt ist. Beispielsweise ist die Breite der Umfangsrille mit 10mm gewählt ausgebildet.

Die Schrägrillen 7 sind einer in der radial äußeren Oberfläche gemessenen Breite ausgebildet, welche mindestens 2mm und maximal 5mm gewählt ist.

Die Breite der Rillen wird dabei jeweils senkrecht zum Rillenverlauf gemessen und bildet den in der radialen Position der radial äußeren Oberfläche der die Rille begrenzenden Profilblockelemente gemessenen Abstand der die jeweilige Rille begrenzenden Flanken. Bei Flanken, die in der radial äußeren Oberfläche mit Übergangsbereich einer Fase ausgebildet sind, wird die Breite dabei zwischen den Schnittlinien der bis zur radial äußere Oberfläche verlängerten Flanken gemessen.

Fig.1 und 6 zeigen ein weiteres Ausführungsbeispiel, bei welchem die Schrägrillen längs ihrer Erstreckung ausgehend von der Umfangsrille 4 bis zur Umfangsrille 5 hin mit kontinuierlich zunehmender Breite ausgebildet sind.

### Bezugszeichenliste

### (Teil der Beschreibung)

- 1: Umfangsrippe
- 2: Profilblockreihe
- 3: Umfangsrippe
- 4: Umfangsrille
- 5: Umfangsrille
- 6: Profilblockelement
- 7: Schrägrille
- 8: Radial äußere Oberfläche
- 9: Rillengrund
- 10: Flanke
- 11: Fase
- 12: Flanke
- 13: Fase
- 14: Rillengrund
- 15: Flanke

## Patentansprüche

1. Fahrzeugluftreifen mit einem profilierten Laufstreifen mit Rillen, die in radialer Richtung R des Reifens nach innen durch einen Rillengrund begrenzt werden, und mit durch Rillen (5,7) begrenzten Profilblockelementen (6), welche in radialer Richtung nach außen hin durch eine radial äußere Oberfläche (8) und zu der begrenzenden Rille jeweils mit einer die Rillenwand bildenden Flanke (10,12) ausgebildet ist, welche sich aus dem Rillengrund (9,14) in radialer Richtung nach außen erstreckt, wobei zumindest einige der Profilblockelemente (6) in axialer Richtung A des Reifens zumindest zu einer Seite hin durch eine Umfangsrille (5) und in Umfangsrichtung U des Reifens durch Schrägrillen (7) begrenzt werden, welche unter Einschluss eines spitzen Winkels ihrer Erstreckungsrichtung zur Umfangsrichtung U in die Umfangsrille (5) münden,
**dadurch gekennzeichnet,**
**dass** das im spitzen Winkel zwischen Umfangsrille (5) und Schrägrille (7) begrenzte Profilblockelement (6) zwischen der radial äußeren Oberfläche (8) und seiner zur Umfangsrille (5) weisenden ersten Flanke (10) mit einer ersten Fase (11) und zwischen der radial äußeren Oberfläche (8) und seiner zur Schrägrille (7) weisenden zweiten Flanke (12) mit einer zweiten Fase (13) ausgebildet ist, wobei die erste Fase (11) die radial äußere Oberfläche (8) in einer ersten Schnittlinie S₁ und die zweite Fase (13) die radial äußere Oberfläche (8) in einer zweiten Schnittlinie S₂ schneidet, die die Schnittlinie S₁ schneidet, wobei die erste Fase (11) in ihren senkrecht zur Umfangsrichtung U ausgebildeten Schnittebenen unter Einschluss eines Neigungswinkels α zur Radialen R geneigt und die zweite Fase (13) in ihren senkrecht zur zweiten Schnittlinie S₂ ausgebildeten Schnittebenen unter Einschluss eines Neigungswinkels β zur Radialen R geneigt ausgebildet ist, wobei der Neigungswinkels α ausgehend von der Einmündung längs der Erstreckung der ersten Fase (11) entlang der Schnittlinie S₁ stetig abnimmt und wobei der Neigungswinkels β ausgehend von der Einmündung längs der Erstreckung der zweiten Fase (13) entlang der Schnittlinie S₂ stetig abnimmt.

2. Fahrzeugluftreifen gemäß den Merkmalen von Anspruch 1,
wobei α mit α ≤ 45° und β mit β≤ 45° ausgebildet ist.

3. Fahrzeugluftreifen gemäß den Merkmalen von Anspruch 1 oder 2,
wobei der Schnittkonturverlauf zwischen erster Fase (11) und erster Flanke (10) von der Einmündung ausgehend längs seiner Erstreckung mit einem kontinuierlich abnehmendem radialen Abstand t₁ zur radial äußeren Oberfläche (8) und der Schnittkonturverlauf zwischen zweiter Fase (13) und zweiter Flanke (12) von der Einmündung ausgehend längs seiner Erstreckung mit kontinuierlich abnehmendem radialem Abstand t₂ zur radial äußeren Oberfläche (8) ausgebildet ist.

4. Fahrzeugluftreifen gemäß den Merkmalen von Anspruch 3,
wobei der Abstand t₁ ausgehend von einem Maximalwert t₁ₘₐₓ - insbesondere mit 1mm ≤ t₁ₘₐₓ ≤3mm - bis zu einem Minimalwert t₁ₘᵢₙ mit t₁ₘᵢₙ =0mm abnehmend ausgebildet ist.

5. Fahrzeugluftreifen gemäß den Merkmalen von Anspruch 4,
wobei der Abstand t₂ ausgehend von einem Maximalwert t₂ₘₐₓ - insbesondere mit 1mm ≤ t₂ₘₐₓ ≤3mm - bis zu einem Minimalwert t₂ₘᵢₙ mit t₂ₘᵢₙ =0mm abnehmend ausgebildet ist.

6. Fahrzeugluftreifen gemäß den Merkmalen von einem oder mehreren der vorangegangenen Ansprüchen,
wobei sich die erste Fase (11) ausgehend von der Mündung über die gesamte Erstreckungslänge der ersten Flanke (10) erstreckt.

7. Fahrzeugluftreifen gemäß den Merkmalen von einem oder mehreren der vorangegangenen Ansprüchen,
wobei das Profilblockelement (6) längs der Erstreckung der Schrägrille (7) ausgehend von der Umfangsrille (5) mit einer in der radial äußeren Oberfläche (8) gemessenen maximalen axiale Erstreckungbreite B ausgebildet ist,
wobei sich die zweite Fase (13) ausgehend von der Mündung längs der Erstreckung der Schrägrille (7) bis in eine Position im axialen Abstand b mit b ≥ (2/3)B - insbesondere mit b ≥ (3/4)B - von der Umfangsrille (5) erstreckt und dort endet.

## Claims

1. Pneumatic vehicle tyre having a profiled tread with channels which are delimited inwardly in a radial direction R of the tyre by a channel base, and having profile block elements (6) which are delimited by channels (5, 7) and which, outwardly in the radial direction, is formed by a radially outer surface (8) and, to form the delimiting channel, is formed in each case with a flank (10, 12) which forms the channel wall, which flank extends outwardly in the radial direction from the channel base (9, 14), wherein at least some of the profile block elements (6) are delimited in an axial direction A of the tyre toward at least one side by a circumferential channel (5) and in the circumferential direction U of the tyre by oblique channels (7) which open into the circumferential channel (5) such that their direction of extent encloses an acute angle with respect to the circumferential channel U,
**characterized**
**in that** the profile block element (6) delimited in the acute angle between circumferential channel (5) and oblique channel (7) is formed, between the radially outer surface (8) and its first flank (10) pointing toward the circumferential channel (5), with a first bevel (11) and, between the radially outer surface (8) and its second flank (12) pointing toward the oblique channel (7), with a second bevel (13), wherein the first bevel (11) intersects the radially outer surface (8) in a first intersection line S₁ and the second bevel (13) intersects the radially outer surface (8) in a second intersection line S₂ which intersects the intersection line S₁, wherein the first bevel (11), in its section planes formed perpendicular to the circumferential direction U, is inclined so as to enclose an angle of inclination α with respect to the radial R, and the second bevel (13), in its section planes formed perpendicular to the second section line S₂, is inclined so as to enclose an angle of inclination β with respect to the radial R, wherein the angle of inclination α decreases continuously, proceeding from the opening-in point, along the extent of the first bevel (11) along the intersection line S₁, and wherein the angle of inclination β decreases continuously, proceeding from the opening-in point, along the extent of the second bevel (13) along the intersection line S₂.

2. Pneumatic vehicle tyre according to the features of Claim 1, wherein α is configured such that α ≤ 45° and β is configured such that β ≤ 45°.

3. Pneumatic vehicle tyre according to the features of Claim 1 or 2, wherein the intersection contour profile between first bevel (11) and first flank (10) is formed, proceeding from the opening-in point, along its extent with a continuously decreasing radial spacing t₁ to the radially outer surface (8), and the intersection contour profile between second bevel (13) and second flank (12) is formed, proceeding from the opening-in point, along its extent with a continuously decreasing radial spacing t₂ to the radially outer surface (8).

4. Pneumatic vehicle tyre according to the features of Claim 3, wherein the spacing t₁ is formed so as to decrease from a maximum value t₁ₘₐₓ - where in particular 1 mm ≤ t₁ₘₐₓ ≤ 3 mm - to a minimum value t₁ₘᵢₙ, where t₁ₘᵢₙ = 0 mm.

5. Pneumatic vehicle tyre according to the features of Claim 4, wherein the spacing t₂ is formed so as to decrease from a maximum value t₂ₘₐₓ - where in particular 1 mm ≤ t₂ₘₐₓ ≤ 3 mm - to a minimum value t₂ₘᵢₙ, where t₂ₘᵢₙ = 0 mm.

6. Pneumatic vehicle tyre according to the features of one or more of the preceding claims,
wherein the first bevel (11) extends, proceeding from the opening-in point, over the entire extent length of the first flank (10).

7. Pneumatic vehicle tyre according to the features of one or more of the preceding claims,
wherein the profile block element (6) is formed, along the extent of the oblique channel (7) proceeding from the circumferential channel (5), with a maximum axial extent width B measured at the radially outer surface (8), wherein the second bevel (13) extends, proceeding from the opening-in point, along the extent of the oblique channel (7) as far as a position with an axial spacing b, where b ≥ (2/3)B - in particular where b ≥ (3/4)B - to the circumferential channel (5), and ends there.

## Revendications

1. Pneumatique pour véhicule avec une bande de roulement profilée avec des rainures, qui sont limitées dans la direction radiale R du pneumatique vers l'intérieur par un fond de rainure, et avec des éléments de blocs profilés (6) limités par des rainures (5, 7), qui sont formés en direction radiale vers l'extérieur par une surface radialement extérieure (8) et vers la rainure de limitation respectivement avec un flanc (10, 12) formant la paroi de rainure, qui s'étend à partir du fond de rainure (9, 14) en direction radiale vers l'extérieur, dans lequel au moins certains des éléments de blocs profilés (6) sont limités dans la direction axiale A du pneumatique au moins vers un côté par une rainure périphérique (5) et dans la direction périphérique U du pneumatique par des rainures obliques (7), qui débouchent dans la rainure périphérique (5) en formant un angle aigu entre leur direction d'extension et la direction périphérique U,
**caractérisé en ce que** l'élément de bloc profilé (6) limité dans l'angle aigu entre la rainure périphérique (5) et la rainure oblique (7) est formé entre la surface radialement extérieure (8) et son premier flanc (10) tourné vers la rainure périphérique (5) avec un premier chanfrein (11) et entre la surface radialement extérieure (8) et son second flanc (12) tourné vers la rainure oblique (7) avec un second chanfrein (13), dans lequel le premier chanfrein (11) coupe la surface radialement extérieure (8) suivant une première ligne de coupe S₁ et le second chanfrein (13) coupe la surface radialement extérieure (8) suivant une seconde ligne de coupe S₂, qui coupe la ligne de coupe S₁, dans lequel le premier chanfrein (11) est incliné dans ses plans de coupe formés perpendiculairement à la direction périphérique U en formant un angle d'inclinaison α avec la direction radiale R et le second chanfrein (13) est incliné dans ses plans de coupe formés perpendiculairement à la seconde ligne de coupe S₂ en formant un angle d'inclinaison β avec la direction radiale R, dans lequel l'angle d'inclinaison α diminue de façon continue à partir de l'embouchure le long de l'extension du premier chanfrein (11) le long de la ligne de coupe S₁ et dans lequel l'angle d'inclinaison β diminue de façon continue à partir de l'embouchure le long de l'extension du second chanfrein (13) le long de la ligne de coupe S₂.

2. Pneumatique de véhicule selon les caractéristiques de la revendication 1, dans lequel α vaut α ≤ 45° et β vaut β ≤ 45°.

3. Pneumatique de véhicule selon les caractéristiques des revendications 1 ou 2, dans lequel l'allure du contour de coupe entre le premier chanfrein (11) et le premier flanc (10) à partir de l'embouchure le long de son extension est réalisée avec une distance radiale t₁ de la surface radialement extérieure qui décroît en continu et l'allure du contour de coupe entre le second chanfrein (13) et le second flanc (12) à partir de l'embouchure le long de son extension est réalisée avec une distance t₂ de la surface radialement extérieure (8) qui décroît de façon continue.

4. Pneumatique de véhicule selon les caractéristiques de la revendication 3, dans lequel la distance t₁ est réalisée de façon décroissante à partir d'une valeur maximale t₁ₘₐₓ - en particulier avec 1 mm ≤ t₁ₘₐₓ ≤ 3 mm - jusqu'à une valeur minimale timin avec t₁ₘᵢₙ = 0 mm.

5. Pneumatique de véhicule selon les caractéristiques de la revendication 4, dans lequel la distance t₂ est réalisée de façon décroissante à partir d'une valeur maximale t₂ₘₐₓ - en particulier avec 1 mm ≤ t₂ₘₐₓ ≤ 3 mm - jusqu'à une valeur minimale t₂ₘᵢₙ avec t₂ₘᵢₙ = 0 mm.

6. Pneumatique de véhicule selon les caractéristiques d'une ou de plusieurs des revendications précédentes, dans lequel le premier chanfrein (11) s'étend à partir de l'embouchure sur toute la longueur d'extension du premier flanc (10).

7. Pneumatique de véhicule selon les caractéristiques d'une ou de plusieurs des revendications précédentes, dans lequel l'élément de bloc profilé (6) est réalisé le long de l'extension de la rainure oblique (7) à partir de la rainure périphérique (5) avec une largeur d'extension axiale maximale (B) mesurée dans la surface radialement extérieure (8), dans lequel le second chanfrein (13) s'étend à partir de l'embouchure le long de l'extension de la rainure oblique (7) jusqu'à une position à une distance axiale b avec b ≥ (2/3)B - en particulier avec b ≥ (3/4)B - de la rainure périphérique (5) et s'y termine.
